Europäisches Patentamt

European Patent Office

Office européen des brevets

(11) Publication number: **0 368 810**
**A1**

## EUROPEAN PATENT APPLICATION

(21) Application number: 89810864.2

(22) Date of filing: 13.11.89

(51) Int. Cl.5 **C10L 5/40**

(30) Priority: 11.11.88 CH 4189/88

(43) Date of publication of application:
**16.05.90 Bulletin 90/20**

(84) Designated Contracting States:
**AT BE CH DE ES FR GB GR IT LI LU NL SE**

(71) Applicant: **BIO-ALTERNATIVE SA**
**Case Postale**
**CH-2063 Engollon(CH)**

Applicant: **Wilkinson, Arthur Hainsworth**

**CH-2205 Montmollin(CH)**

(72) Inventor: **Groux, Bernard**

**CH-2063 Engollon(CH)**

(74) Representative: **Kerr, Andrew**
**Postfach Finkelerweg 44**
**CH-4144 Arlesheim(CH)**

(54) Fuel and compressed pellets of aromatised charcoal.

(57) Compressed pellets of aromatised charcoal of uniform fines are described containing a sufficient quantity of aromatising material for emitting an agreeable aroma throughout the whole combustion.

EP 0 368 810 A1

## Fuel and compressed pellets of aromatised charcoal

The present invention relates to a fuel, e.g. in the form of compressed pellets of charcoal, and a process for its manufacture.

In the developed countries, the use of a charcoal grill has become very common. Charcoal burns at a very high temperature and can produce very considerable heat. Furthermore, the use of a charcoal grill permits all those who participate in the meal to follow the cooking of the food. At the same time, most of the charcoal products actually on sale in the market give off a disagreeable and tarry odour and do not improve the quality of the prepared food.

Therefore this invention is aimed at providing a charcoal or fuel which, in the course of its combustion gives off an agreeable odour to the surrounding air.

The present invention also provides for charcoal which can be used in grills which, in the course of its combustion, improves the flavour of the grilled meats. So the invention proposes essentially uniform fuel or compressed pellets of aromatised charcoal, e.g. for use in open domestic grills, containing a sufficient quantity of aromatic material to emit an agreeable odour throughout the combustion.

The invention also provides a new process for the manufacture of uniform aromatised pellets of charcoal (as defined hereafter), comprising the moulding in the form of a uniform powder or paste of charcoal and of an aromatic material and subsequently the passing of the said powder or paste through a press so as to obtain coherent pellets of various shapes.

The powder or paste of the present invention contains a sufficient but variable quantity of aromatic material which furnishes, if compressed, dried and burned, an aromatic odour to the surrounding air.

In accordance with the invention, the quantity of aromatic material in the powder or paste varies depending upon the particular aromatic material used. It can be from 8 to 15% by weight, conveniently from 8 to 12% by weight and preferably from 10 to 12% by weight.

The aromatic material used can be any material which, if it is heated, emits an agreeable odour. However it is not worth using a material which degrades rapidly at low temperature or if it is warmed. Such a material is not usable in the present invention.

Some examples of usable materials are:

Coriander, fenugreek, cinnamon, turmeric, paprika, bay leaves, poppy seeds, nutmeg, saffron, celery seeds, cardamon, white and black pepper, onion, cloves, white and black mustard seed, garlic, aniseed, pimento, cumin, fennel, ginger, kalonji, mace, rosemary, mint, oregano, parsley, tarragon, thyme, basil, marjoram, mixed fine herbs, resin of pine and fir, (needles, bark and combs). Of course the invention is not limited to the use of the said aromatic materials. One can equally use other aromatic materials of which a great many are given in the dictionary Perfume and Flavour Materials of Natural Origin (Arctander). Furthermore, the market is at the moment rich in synthetic aromatic materials. Most of the vegetable and fruit aromas such as strawberry, banana, pineapple, carrot, cabbage, to list only a few, have been imitated by industrial enterprises making synthetic chemical products such as eg. Unilever, Harman Riemer, Firmenich, Givaudan and Procter and Gamble. Therefore if a particular odour is required, the technical experts in these enterprises can be consulted. Otherwise, the patent specifications in this field offer the possibility of a rapid identification of such an odour.

All charcoal produced in the present manner, but particularly by the process of Bio-Alternative S.A, can be used for the products and the process of the present invention. Charcoal is produced conventionally simply by the partial combustion or heating of materials of vegetable origin until the tarry materials and volatiles are eliminated; the residues of this process are designated in most cases in an approximative manner as unrefined charcoal. Many materials can be used as a basis for manufacturing the charcoal, such as straw, maize, cocoa and coffee wastes.

Examples of methods of manufacture of charcoal are given in the following patent specifications: US-A-1510730; FR-A-509652; FR-B-975618; FR-B-2586252; CH-A-663061; DE-C-2024210; GB-A-596426; GB-A-1074914 and FR-A-2127429.

The process of manufacture of the aromatised charcoal may be carried out in the following manner:

The charcoal and the aromatic material are separately ground and subsequently mixed in the presence of a binder. Examples of binder are corn starch and manioc flour.

Agglomeration into pellets is effected normally at a conventional temperature. Drying of the pellets is carried out in the usual way at a relatively low temperature, of the order of 85°C to 120°C and is directed to reduction of the water content to under 5%. It is important that this operation is conducted in such a way that the aromatic qualities of the aromatic materials are not destroyed. Thus it is preferred to utilise a stream of warm dry air at a temperature not exceeding 110°C, more preferably 100°C. It is especially

2

convenient to use a perforated conveyor so that the full surface of the pellets is contacted with the air stream. The drying is preferably allowed to continue slowly until the desired water content is reached, which may be determined by experience. This period is usually not less than half an hour and may take 1 or 2 hours or even more if the thickness of the layer of pellets on the conveyor is excessive. If the pellets are dried too fast or at too high a temperature a homogeneous product which evolves a desired aroma throughout the combustion cannot be guaranteed.

Some possible specific formulations in accordance with the present invention are shown in the following examples.

## Example 1

The output from a BASA (Bio-Alternative SA) pyrolyser (as described in Swiss patent 663031) fed with oak wood was led to a cooling screw-grinder (Sahut-Conreur & Cie) in which the charcoal pieces were simultaneously ground to fines and cooled to ambient temperature. The fines stored with a residual water content of about 15% (w/w). Separately, dried oregano was ground to a fine powder in a centrifugal grinder and stored with a residual water content of about 5%. A batch of paste was prepared by admixing in a rotary 'cement' mixer: 1kg dried oregano powder, 600g starch powder and 8kg charcoal fines. Water was added gradually until the paste had the consistency of a 'dry' cement mortar. The paste was fed through a screw heater (Sahut-Conreur) to the feeding screw of a Sahut-Conreur MP 800,2 x 565 pelletising machine at an input temperature of 90°C, at a set pressure of 2 t/cc, and a set tangential speed of 0.5m/s, producing about 10kg of 33g pellets with a residual water content of about 10% (w/w). Excess slurry from the machine was stored for further batch processing. The pellets were conveyor-dried in a hot air draught at 100°C for about half an hour to give a final water content of 5% (w/w).

The following is a summary of the main features of this example for comparison with the remaining examples:

| Aromatic material | oregano 10% |
| Charcoal fines | oak wood 80% |
| Water content[1] | 10% |
| Binder | starch 6% |
| Weight of pellets | 33g |
| Combustion temperature | 550°C |

([1] before final drying step)

In Examples 2 and 3 the conditions of Example 1 were repeated, except as indicated in the summaries.

| Example 2 | |
| --- | --- |
| Aromatic material | bay leaves 8% |
| Charcoal fines | eucalyptus wood 80% |
| Water content | 12% |
| Binder | manioc flour |
| Weight of pellets | 35g |
| Combustion temperature | 320°C |

# EP 0 368 810 A1

| Example 3 | |
|---|---|
| Aromatic material | thyme 9% |
| Charcoal fines | coffee husks 85% |
| Binder | manioc flour |
| Weight of pellets | 35g |
| Combustion temperature | 580°C |

## Claims

1. Compressed pellets of aromatised charcoal of uniform fines, containing a sufficient quantity of aromatising material for emitting an agreeable aroma throughout the whole combustion.

2. Compressed pellets according to claim 1 characterised in that they contain from 8 to 15% of aromatising material.

3. Compressed pellets according to claim 1 characterised in that they contain from 8 to 12% of aromatising material.

4. Compressed pellets according to claim 1 characterised in that they contain from 10 to 12% of aromatising material.

5. Compressed pellets according to any one of claims 1 to 4 characterised in that the charcoal originates from vegetable waste material.

6. Compressed pellets of aromatised charcoal of uniform fines according to any one of the preceding claims characterised in that the aromatising material is a natural material.

7. Compressed pellets according to claim 6 characterised in that the aromatising material is selected from: coriander, fenugreek, cinnamon, turmeric, paprika, bay leaves, poppy seeds, nutmeg, saffron, celery seeds, cardamon, white and black pepper, onion, cloves, white and black mustard seed, garlic, aniseed, pimento, cumin, fennel, ginger, kalonji, mace, rosemary, mint, oregano, parsley, tarragon, thyme, basil, marjoram, mixed fine herbs, resin of pine and fir, (needles, bark and combs).

8. Compressed pellets according to any one of claims 1 to 5 characterised in that the aromatising material is a synthetic material.

9. Compressed pellets according to any one of the preceding claims containing from 3 to 5 % water.

10. Compressed pellets according to any one of the preceding claims containing as auxiliary agents a binder and/or colouring material.

11. A process for manufacturing combustible compressed pellets of charcoal according to any one of the preceding claims characterised in that the aromatising material and the charcoal are ground together or separately and mixed, compressed into pellets and dried.

12. A manufacturing process according to claim 11 characterised in that the drying is carried out at a temperature from 85 to 120°C.

13. A manufacturing process according to claim 11 characterised in that the drying temperature does not exceed 110°C.

14. A manufacturing process according to any one of claims 11 to 13 characterised in that the drying is carried out over a period from 30 minutes to two hours.

15. A manufacturing process according to any one of claims 12 to 14 characterised in that the drying is carried out using an air stream heated to the specified temperature.

16. A manufacturing process according to any one of claims 11 to 15 characterised in that the drying is carried out using a perforated conveyor.

17. A manufacturing process according to any one of claims 11 to 16 characterised in that the mixing step is carried out in a rotary mixer with the addition of water to form a paste which is fed to a pelletising machine.

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 406 165  (STARK) <br> * Claim 1 * <br> --- | 1-17 | C 10 L    5/40 |
| A | FR-A-2 270 315  (LEROY) <br> * Claims 1-7 * <br> --- | 1-17 | |
| A | US-A-3 454 377  (RENWIEK) <br> --- | | |
| A | US-A-3 709 700  (ROSS) <br> ----- | | |

TECHNICAL FIELDS
SEARCHED (Int. Cl.5)

C 10 L

The present search report has been drawn up for all claims

| Place of search | Date of completion of the search | Examiner |
|---|---|---|
| THE HAGUE | 21-02-1990 | MEERTENS J. |

EPO FORM 1503 03.82 (P0401)